# EUROPEAN PATENT APPLICATION

(11) **EP 2 636 652 A1**
(43) Date of publication of application: **11.09.2013**
(21) Application number: 11837848.8
(22) Date of filing: 14.10.2011
(51) Int. Cl.: C03B 18/02

(54) **METHOD FOR PRODUCING FLOAT PLATE GLASS AND APPARATUS FOR PRODUCING FLOAT PLATE GLASS**

(30) Priority: 04.11.2010 JP 2010247596
(71) Applicant: Asahi Glass Company, Limited, Tokyo 100-8405 (JP)
(72) Inventor: TAKIGUCHI, Tetsushi, Tokyo 100-8405 (JP); INOUE, Shunji, Tokyo 100-8405 (JP); TANII ,Shiro, Tokyo 100-8405 (JP)
(74) Representative: Müller-Boré & Partner Patentanwälte
(86) International application number: PCT/JP2011/073737
(87) International publication number: WO 2012/060197

(57) **Abstract**

The present invention relates to a method for producing a float sheet glass, the method including: producing a molten glass by supplying a glass raw material into a melting bath; supplying continuously the molten glass onto a surface of a molten metal held in a bath including bottom bricks and a bottom casing which covers the bottom bricks; and causing the molten glass to flow in a predetermined direction along the surface of the molten metal, and then float-forming the molten glass into a band plate-shaped glass ribbon, in which a fluctuation range of a temperature of an external surface of the bottom casing is controlled to fall within 4°C.

## Description

### TECHNICAL FIELD

The present invention relates to a method for producing a float sheet glass and a device for producing the float sheet glass.

### BACKGROUND OF THE INVENTION

The production of a sheet glass by float-forming is executed by a method which will be described below. A glass raw material is supplied into a melting bath and a molten glass is obtained. The molten glass obtained is continuously supplied onto a surface of a molten metal held in a bath. The molten glass supplied is caused to flow along the surface of the molten metal and is then float-formed into a band plate-shaped glass ribbon. The glass ribbon is then taken out from an exit of the bath, whereafter the glass ribbon is slow cooled in a slow cooling furnace, is then washed and is cut into a predetermined size.

The method for producing a sheet glass by float-forming is highly productive, and the sheet glass has a superior degree of flatness. Consequently, the sheet glass is widely used as a sheet glass for building, a sheet glass for automobile and a sheet glass for FPD (Flat Panel Display).

The bath is made up of a plurality of refractory bricks and a casing which covers external surfaces of the refractory bricks, and a molten metal such as a molten tin is held in the bath. Here, a refractory brick making up a hearth of the bath is called "bottom bricks", and an iron casing which covers an external surface of the bottom brick is called "bottom casing".

When the bath is made in the way described above, there are fears that the molten metal passes through joints of the bottom bricks to reach the bottom casing, whereby the bottom casing is deformed and fails. In order to avoid this risk, as described in Patent Documents 1, 2, air is blown against an external surface of the bottom casing to air-cool the bottom casing. The molten metal near the bottom casing of joints of the bottom bricks is solidified by air-cooling the bottom casing. This can prevents the molten metal from passing through the joints of the bottom bricks to reach the bottom casing, and also prevents the bottom casing form being deformed and failed. When the molten metal is a molten tin, the bottom casing should be cooled down to a melting point (231.9°C) of a tin or lower.

### BACKGROUND ART

### Patent Document

Patent Document 1: JP-B-4-29614
Patent Document 2: JP-A-2003-261339

### SUMMARY OF THE INVENTION

### PROBLEMS THAT THE INVENTION IS TO SOLVE

When the external surface of the bottom casing is air cooled by supplying a constant amount of air so as to reach the melting point of the molten metal or lower, a phase boundary between the molten metal (a liquid phase) and the solidified metal (a solid phase) is formed on the joints of the bottom bricks. The position of this phase boundary is shifted vertically by a fluctuation in a temperature of the external surface of the bottom casing. When the temperature of the molten metal or the temperature of the external surface of the bottom casing rises, the solidified metal making up the phase boundary is melted to cause a transition to the molten metal. As this occurs, bubbles are produced within the molten metal by a chemical reaction at the time of the transition. These bubbles rise through the molten metal in the bath and adhere to a surface (hereinafter, referred to as a bottom surface) of the glass ribbon flowing on the surface of the molten metal which is in contact with the molten metal. Depressed bubble defects are produced on the bottom surface of the glass ribbon by adhesion of the bubbles, and then the flatness of the glass ribbon is deteriorated. Although a sheet glass for liquid crystal displays is obtained by polishing a surface of a glass ribbon (sheet glass) cut after float-forming, the flatness in float-forming affects the removal amount and hence affects the productivity of the sheet glass.

In addition, the temperature of the external surface of the bottom casing fluctuates depending on fluctuation of the temperature of outside air which is the ambient temperature thereof. Namely, the temperature of the external surface of the bottom casing rises in the daytime and lowers at night. Consequently, the phase boundary between the molten metal and the solidified metal which presents on the joints of the bottom bricks is shifted vertically according to a day fluctuation in the temperature of outside air, and this results in a state in which bubbles are easily produced from the molten metal present on the joints of the bottom bricks.

In the method for producing a sheet glass by float-forming, which is disclosed in Patent Document 2, the mixture of bubbles into a molten metal held in a both is suppressed by a method which will be described below. A thin plate which is covered by a coating material made of tungsten or a tungsten alloy is placed on an upper surface of a bottom brick, and bubbles are captured by the bottom surface of a thin plate so that bubbles produced from joints of the bottom bricks are not mixed into a molten tin.

However, the tungsten or the tungsten alloy disclosed in Patent Document 2 has a high melting point, and hence, it is not easy to work them.

The invention has been made in view of the problem, and an object thereof is to provide a method for producing a float sheet glass and a device for producing a float sheet glass which can reduce the production of bubble-caused defects in a bottom surface of a glass ribbon by suppressing the production of bubbles from a molten metal present on joints of the bottom bricks easily.

### MEANS FOR SOLVING THE PROBLEMS

The invention includes the following items (1) to (10).

(1) A method for producing a float sheet glass, the method comprising: producing a molten glass by supplying a glass raw material into a melting bath; supplying continuously the molten glass onto a surface of a molten metal held in a bath including bottom bricks and a bottom casing which covers the bottom bricks; and causing the molten glass to flow in a predetermined direction along the surface of the molten metal, and then float-forming the molten glass into a band plate-shaped glass ribbon, wherein a fluctuation range of a temperature of an external surface of the bottom casing is controlled to fall within 4°C.

(2) The method for producing a float sheet glass according to (1), wherein the fluctuation range is controlled to fall within 4°C by measuring a temperature of the external surface of the bottom casing and blowing a fluid against the external surface of the bottom casing based on the temperature measured.

(3) The method for producing a float sheet glass according to (1) or (2), wherein the fluctuation range is controlled to fall within 4°C throughout a day.

(4) The method for producing a float sheet glass according to (2) or (3), wherein the fluid is air, a mixture of air and water, or water.

(5) The method for producing a float sheet glass according to (4), wherein the air is blown against the external surface of the bottom casing by an air supply fan in which a rotation speed thereof is controlled by an inverter.

(6) A device for producing a float sheet glass comprising: a melting bath which melts a glass raw material to produce a molten glass; and a bath holding a molten metal in which the molten glass is continuously supplied onto a surface thereof and including bottom bricks and a bottom casing which covers the bottom bricks, the device being configured to float-form the molten glass into a band plate-shaped glass ribbon, wherein a fluid supply device is provided on an outer circumference of the bottom casing, and the fluid supply device is configured to control a day fluctuation range of a temperature of an external surface of the bottom casing to fall within 4°C by blowing fluid against the external surface of the bottom casing based on a measured temperature of the external surface of the bottom casing.

(7) The device for producing a float sheet glass according to claim 6, wherein the fluid supply device comprises: a fluid supply machine configured to supply the fluid; a supply pipe in which one open end face thereof is connected to the fluid supply machine and the other open end face of the supply pipe oppositely faces the external surface of the bottom casing; a temperature measuring device disposed on the external surface of the bottom casing; and a control device configured to control supply amount of the fluid which is supplied from the fluid supply machine based on the temperature of the external surface of the bottom casing, measured by the temperature measuring device.

(8) The device for producing a float sheet glass according to (7), wherein the fluid supply device is a device which supplies air, a mixture of air and water, or water.

(9) The device for producing a float sheet glass according to (8), wherein the fluid supply machine comprises an air supply fan in which a rotation speed thereof is controlled by an inverter.

(10) The device for producing a float sheet glass according to any one of (7) to (9), wherein the supply pipe comprises: a main pipe which is disposed in a longitudinal direction of the bath; and a branch pipe that branches off the main pipe along the longitudinal direction of the bath and which further branches so as to spread out toward the end along a transverse direction of the bath.

### ADVANTAGE OF THE INVENTION

According to the method for producing a float sheet glass of the invention, it is possible to provide the method for producing a float sheet glass and the device for producing a float sheet glass which can reduce the production of bubble-caused defects in the bottom surface of the glass ribbon by suppressing the production of bubbles from the molten metal present on the joints of the bottom bricks easily.

### BRIEF DESCRIPTION OF THE DRAWINGS

[Fig. 1] Fig. 1 is a schematic side sectional view showing an embodiment of a method for producing a float-formed sheet glass of the invention.
[Fig. 2] Fig. 2 is a sectional view taken along the line A-A' in Fig. 1.
[Fig. 3] Fig. 3 is a graph depicting changes with time in a temperature of an external surface of a bottom casing, the number of bubble-caused defects, and outside air temperature at the external surface of the bottom casing in the production method of the invention.
[Fig. 4] Fig. 4 is a graph depicting changes with time in a temperature of an external surface of a bottom casing, the number of bubble-caused defects, and outside air temperature at the external surface of the bottom casing in a production method of the background art.

### MODE FOR CARRYING OUT THE INVENTION

Hereinafter, a mode for carrying out the invention will be described by reference to the drawings.

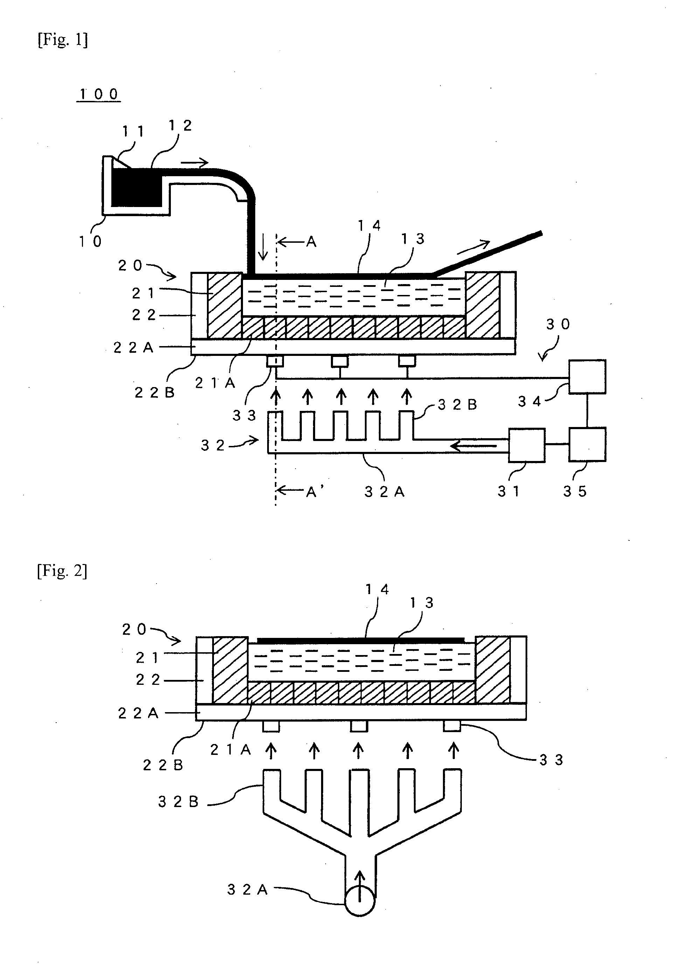

Fig. 1 is a schematic side sectional view showing an embodiment of a method for producing a float-formed sheet glass of the invention. Fig. 2 is a sectional view taken along the line A-A' in Fig. 1. Incidentally, in Figs. 1 and 2, a proportional relation between the shape of each device and the shape of a glass ribbon is exaggerated for the sake of easy understanding of the figures.

As shown in Fig. 1, a float-formed sheet glass is produced using a method which will be described below. A glass raw material 11 is supplied into a melting bath 10 to obtain a molten glass 12. The molten glass 12 is continuously supplied onto a surface of a molten metal 13 held in a bath 20. The molten glass 12 supplied is caused to flow in a predetermined direction (a direction from the left to the right in Fig. 1) along the surface of the molten metal 13 and is then float-formed into a band plate-shaped glass ribbon 14. The glass ribbon 14 is taken out from an exit of the bath 20, whereafter the glass ribbon 14 is slow cooled in a slow cooling furnace (not shown), is then washed and is thereafter cut into a predetermined size. The molten metal 13 is typically molten tin.

Although the molten glass 12 obtained in the melting bath 10 is supplied directly into the bath 20 in Fig. 1, the invention is not limited thereto. The molten glass 12 obtained in the melting bath 10 may be supplied into the bath 20 by way of a deaerator which removes air dissolved in the molten glass 12 and an agitator which agitates the molten glass 12 to homogenize.

The bath 20 includes a plurality of bricks 21 and a casing 22 which covers external surfaces of the bricks 21 and holds therein the molten metal 13 such as a molten tin. Here, in this embodiment, bricks forming a hearth of the bath 20 are called bottom bricks 21 A, and the casing which covers the external surfaces of the bottom bricks 21A is called a bottom casing 22A.

A material for the bricks 21 may be any material that has a low or no reactivity with respect to the molten metal 13 and which has resistance to high temperature, and alumina, sillimanite, and clay material exemplified.

Although the bottom casing 22A is not specifically limited to the materials, the bottom casing 22A is formed of a metallic material such as an iron or a stainless steel, for example.

A fluid supply device 30 for cooling the bottom casing 22A is disposed below the bottom casing 22A.

As shown in Fig. 1 and Fig. 2, the fluid supply device of this embodiment includes a fluid supply machine 31, a supply pipe 32, a temperature measuring device 33, a temperature indicator 34 and a control device 35.

The fluid supply machine 31 is an apparatus which supplies a fluid for cooling a bottom casing external surface 22B. A fluid which is supplied from the fluid supply machine 31 is carried towards the bottom casing external surface 22B by the supply pipe 32, which will be described later.

There is no specific limitation on a fluid to be used, provided that a fluid used can cool the bottom casing external surface 22B. Air, water or a mixture of air and water is raised as an example of a fluid to be used. From the viewpoint of easy application to a conventional method for producing a float-formed sheet glass, the fluid is preferably air. Additionally, in the case of the fluid being air, the fluid supply machine 31 becomes a supply fan.

The supply pipe 32 shown in Figs. 1 and 2 includes a main pipe 32A and branch pipes 32B. The main pipe 32A is disposed along a longitudinal direction of the bath 20 and is connected to the fluid supply machine 31 at one end thereof. The branch pipes 32B branch off the main pipe 32A along the longitudinal direction of the bath and further branch individually so as to spread out toward the end along a transverse direction of the bath 20 as they extend. Terminating end faces of the branch pipes 32B are made open, and the open end faces are directed towards the bottom casing external surface 22B. The fluid supplied from the fluid supply machine 31 passes through the main pipe 32A and the branch pipes 32B and is then discharged from the open end faces so as to be blown against the bottom casing external surface 22B, whereby the bottom casing external surface 22B is cooled.

The supply pipe 32 of the invention is not limited to the embodiment. The branch pipes 32B which branch off along the longitudinal direction of the bath 20 may not branch over the whole area of the bath 20 along the longitudinal direction thereof, and hence, the branch pipes 32B may branch non-uniformly only at an upstream side of the bath 20 (the left in Fig. 1). It is preferable to position the fluid supply machine 31 at the upstream side of the bath 20, that is to say, preferable to flow the fluid supplied from the fluid supply machine 31 from the upstream side to a downstream side of the bath 20 along the longitudinal direction thereof in the main pipe 32A from the viewpoint of cooling efficiently the upstream side of the bath 20 which should be cooled more. Most of bubbles that are produced from the molten metal present on joints of the bottom bricks 21A are produced from the molten metal which presents on the upstream side of the bath 20, and therefore, the production of bubbles can be suppressed efficiently by disposing the branch pipes 32B which branch in the longitudinal direction non-uniformly at the upstream side.

Incidentally, the fluid supply machine 31 may not be positioned directly below the bath 20 and hence may be disposed in such an orientation that the fluid is supplied at right angles or obliquely to the main pipe 32A which extends along the longitudinal direction of the bath 20 from a side below the bath 20. In this case, it is preferable from the reason described above that the branch pipes 32 merge with the main pipe 32A on the upstream side of the bath 20 because the upstream side of the bath 20 can be cooled with good efficiency. Additionally, a plurality of fluid supply machines 31 may be used at the same time. In this case, fluids that are supplied to the main pipe 32A may be merged with each other at one location for supply thereto or may be supplied to the main pipe 32A at a plurality of upstream and downstream locations. Alternatively, the main pipe 32A may be divided along the length thereof so that a plurality of fluid supply machines 31 are connected individually to the divided portions of the main pipe 32A.

In addition, the number of branch pipes 32B which branch off in the longitudinal direction of the bath 20 is not specifically limited as long as the generation of air bubbles is suppressed, and hence, there may be one or a plurality of branch pipes 32B. Also, intervals at which the branch pipes 32B branch off in the longitudinal direction of the bath 20 are not specifically limited, and hence, the branch pipes 32B may branch off at regular intervals or at irregular intervals.

Since a plurality of branch pipes 32B, which branch along the transverse direction of the bath 20, branch in such a way as to spread out toward the end, the temperature distribution in the transverse direction of the bath 20 can be made uniform.

In addition, the number of branch pipes 32B, which branch along the transverse direction of the bath in such a way as to spread out toward the end, is not specifically limited as long as the uniform temperature distribution is attained in the transverse direction of the bath 20. Additionally, intervals at which the branch pipes 32B branch along the transverse direction of the bath in such a way as to spread out toward the end is not specifically limited, and hence, the branch pipes 32B may branch at regular intervals or irregular intervals.

In this embodiment, while only the bottom casing 22A which covers the bottom bricks 21 A of the bath 20 is designed to be cooled, the invention is not limited to this configuration. A supply pipe may be provided to cool a side casing which covers bricks of side walls of the bath. It is possible to reduce the number of bubble-caused defects to be produced more effectively by cooling the side casing, as well.

In addition, in this embodiment, while a gap is provided between the bottom casing external surface 22B and the open end face of each of the branch pipes 32B, the invention is not limited to this configuration, provided that the temperature of the bottom casing external surface 22B is allowed to fall within a desired day fluctuation range, which will be described later. The bottom casing external surface 22B and the open end faces of the branch pipes 32B may be in contact with each other.

Further, in this embodiment, it is preferable to provide an exhaust pipe (not shown) through which the fluid used to cool the bottom casing external surface 22B is discharged to the outside of a float-forming device 100. This is because the bottom casing external surface 22B is cooled efficiently by discharging the fluid whose temperature is increased as a result of the fluid cooling the bottom casing external surface 22B to the outside of the float-forming device 100.

The temperature measuring device 33 is a device for measuring the temperature of the bottom casing external surface 22B and is provided on the bottom casing external surface 22B. There is imposed no specific limitation on the number of temperature measuring devices 33 to be provided. For example, as shown in Fig. 1, only the upstream side of the bath 20 where bubbles are produced more may be measured. Alternatively, the temperature measuring devices 33 may be disposed in upstream, middle stream and downstream positions along the longitudinal direction of the bath 20. In addition, for example, as shown in Fig. 2, a plurality of temperature measuring devices 33 may be disposed along the transverse direction of the bath 20.

It is preferable that a surface of the temperature measuring device 33 is covered by an insulation material. By covering the temperature measuring device 33 with the insulation material, it becomes difficult that the temperature measuring device 33 is affected by the ambient temperature of the bottom casing external surface 22B.

The temperature indicator 34 is an indicator which indicates the temperature data of the bottom casing external surfaces 22B which is measured by the temperature measuring devices 33. The temperature data measured is indicated one after another on a screen of the temperature indicator 34, whereby the monitoring staff is allowed to grasp easily the temperature data measured.

The temperature data indicated is a plurality of temperature data measured by a plurality of temperature measuring devices 33 provided on the bottom casing external surface 22B and a mean value thereof, or the temperature data of a location or locations which are effective to reduce the number of bubble-caused defects to be produced.

The control device 35 is a device for controlling the supply amount of fluid which is supplied from the fluid supply machine 31. The monitoring staff operates the control device 35 to control manually the supply amount of fluid so that the fluctuation range of the temperature of the bottom casing external surface 22B falls within a desired range based on the temperature data indicated on the temperature indicator 34. The temperature data based on which the supply amount of fluid is controlled may be the mean value of the temperature data measured by a plurality of temperature measuring devices 33 or the temperature data of the location or locations which are effective to suppress the production of bubbles. Incidentally, the fluctuation range in the invention means a difference between a highest temperature and a lowest temperature.

The control of the fluctuation range will be described. For example, when float sheet glasses are produced from the morning to the noon of a day, the temperature of outside air surrounding the bottom casing external surface 22B tends to rise. The temperature of the bottom casing external surface 22B also tends to rise, and when it seems that the fluctuation range fails to remain in the desired range, the supply amount of fluid is increased.

When float sheet glasses are produced from the noon to the night of a day, the temperature of outside air surrounding the bottom casing external surface 22B tends to lower. The temperature of the bottom casing external surface 22B also tends to lower, and when it seems that the fluctuation range fails to remain in the desired range, the supply amount of fluid is decreased.

In the description above, while the supply amount of fluid is increased from the morning to the noon and the supply amount of fluid is decreased from the noon to the night, the invention is not limited thereto. Even at midnight, when it seems that the fluctuation range of the temperature of the bottom casing external surface 22B fails to remain in the desired range, the supply amount of fluid is increased or decreased.

In the invention, the fluctuation range of the temperature of the bottom casing external surface 22B is 4°C or less. It is preferable that the fluctuation range is 3°C or less, and it is more preferable that the fluctuation range is 2°C or less. In case the fluctuation range of the temperature of the bottom casing external surface 22B is 4°C or less, it becomes difficult that the molten metal present on the joints of the bottom bricks 21 A is melted, thereby making it possible to suppress the production of bubbles.

In the invention, it is preferable that the fluctuation range of the temperature of the bottom casing external surface 22B is controlled to fall within 4°C throughout a day (24 hours). The temperature of outside air surrounding the bottom casing external surface 22B which affects the temperature of the bottom casing external surface 22B fluctuates over from several degrees to several tens of degrees a day, and therefore, it is possible to suppress the production of bubbles by controlling the fluctuation range to fall within 4°C throughout a day. Here, a fluctuation in a temperature of the bottom casing external surface 22B throughout a day is referred to as "a day fluctuation", and the range of the day fluctuation is referred to as "a day fluctuation range".

In addition, in the case of the fluid being air, it is preferable that air is blown against the bottom casing external surface 22B by a supply fan in which the rotation speed thereof is controlled by an inverter. The inverter transforms an alternating-current power that is supplied as a driving power supply of the supply fan into a direct current power once and then transforms again the direct current power into an alternating-current power having a frequency which differs from that of the original alternating-current power. The rotation speed of the supply fan is dependent on the frequency of the alternating-current power which is transformed from the direct current power, and therefore, by changing the frequency of the alternating-current power, the rotation speed of the supply fan can be controlled finely. In other words, by changing the frequency of the alternating-current power that is supplied as the driving power supply of the supply fan, it is possible to control the supply amount of air finely. Consequently, it is possible to allow the temperature of the bottom casing external surface 22B to fall within the desired fluctuation range.

For example, when it seems that the temperature of the bottom casing external surface 22B rises to thereby fail to remain within the desired fluctuation range, the frequency of the driving power of the supply fan is changed to a high frequency by the inverter so as to increase the rotation speed of the supply fan. On the other hand, when it seems that the temperature of the bottom casing external surface 22B lowers to thereby fail to remain within the desired fluctuation range, the frequency of the driving power of the supply fan is changed to a low frequency by the inverter so as to decrease the rotation speed of the supply fan. Thus, it becomes possible to keep the fluctuation range of the temperature of the bottom casing external surface 22B within the desired range using the method described above, thereby making it possible to produce a float-formed sheet glass which does not have many bubble-caused defects. Since the sheet glass which does not have many bubble-caused defects can be produced, it is possible to reduce the removal amount of a bottom surface of the sheet glass by float-forming, thereby making it possible to improve the productivity of sheet glass.

In the embodiment, while the supply amount of fluid by the control device 35 is described as being manually controlled by the monitoring staff, the invention is not limited thereto. The control device 35 may be automatically controlled by a control program stored in a storage unit (not shown). In this case, a relational operation is performed on the temperature data measured and the desired range of the fluctuation range by using an arithmetic unit such as an MPU (not shown) in place of the temperature indicator 34, and the supply amount is controlled by the control device 35 according to the operation result.

Thus, while the invention has been described in detail with reference to embodiments thereof, it will be apparent that various changes and modifications can be made therein without departing from the scope thereof.

### [Examples]

### (Example 1)

In Example 1, a sheet glass was produced in the method for producing a float-formed sheet glass shown in Figs. 1 and 2.

Firstly, an alkali-free glass raw material was supplied into a melting bath to produce a molten glass.

Next, molten tin was supplied to be held in a bath which included refractory bricks and an iron casing which covered the refractory bricks. After the molten tin had been held in the bath, a bottom casing which covered bottom bricks making up a hearth of the bath was cooled by a fluid supply device provided below the bottom casing so that the temperature of an external surface of the bottom casing becomes a melting point of tin or lower.

Thereafter, the molten glass was continuously supplied onto a surface of the molten tin and the molten glass supplied was caused to flow from an upstream side to a downstream side of the bath along the surface of the molten metal. While the molten glass was flowing, the fluid supply device blew air against the bottom casing external surface so that a day fluctuation range of the temperature of the bottom casing external surface could fall within 2°C. The supply amount of air was controlled by a supply fan in which the rotation speed thereof was controlled by an inverter.

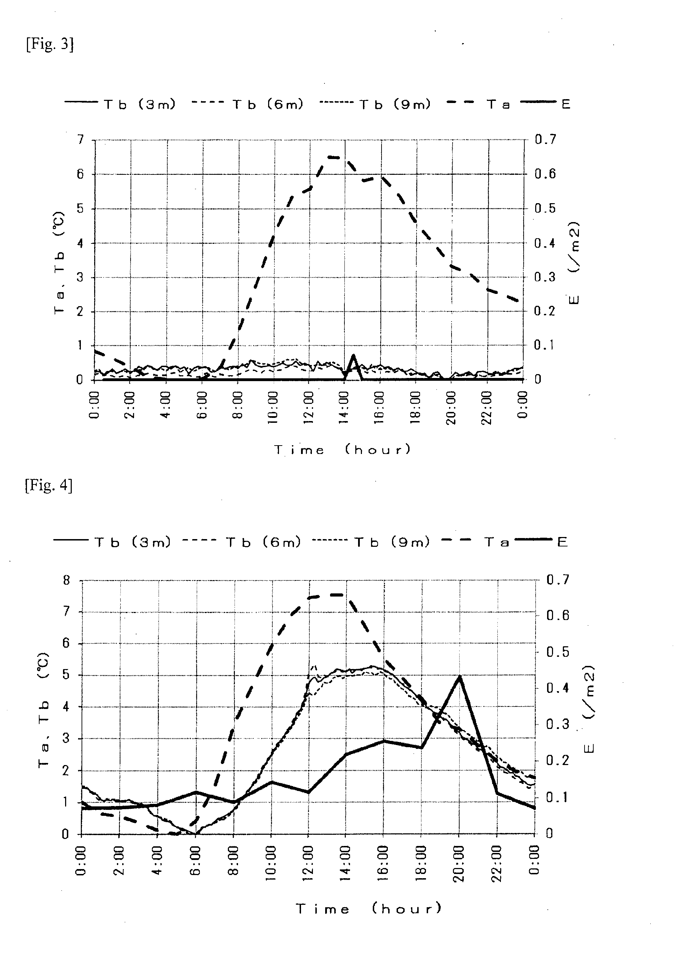

Fig. 3 is a graph depicting day fluctuations in the temperature Tb of the bottom casing external surface, the outside air temperature Ta on the bottom casing external surface and the number E of depressed bubble-caused defects formed in a bottom surface of the glass ribbon. Tb, Ta and E are mean values of data taken for one week.

A first axis of ordinates of the graph which is at a left-hand side thereof represents the temperature Tb of the bottom casing external surface and the outside air temperature Ta on the bottom casing external surface. A thin solid, dotted and broken lines represent individually bottom casing external surface temperatures Tb of transversely central portions of the bath which presents, respectively, 3 m, 6 m, and 9 m away from an upstream end of the bath along the longitudinal direction of the bath. The outside air temperature Ta is represented by a thick broken line, and values indicated thereby are based on the data observed by Japan Meteorological Agency. In addition, the temperature Tb of the bottom casing external surface and the outside air temperature Ta on the bottom casing external surface which are represented on the first axis of ordinates are specified based on their lowest temperatures being referred to as 0°C.

A second axis of ordinates of the graph which is at a right-hand side thereof represents the number E of bubble-caused defects per unit area (1 m²) on the bottom surface of the glass ribbon. A thick solid line represents the number E of bubble-caused defects per unit area on the bottom surface of the glass ribbon. The number of bubble-caused defects denotes the number of bubble-caused defects having the size of 20 µm or larger.

It is seen from Fig. 3 that the temperature Tb of the bottom casing external surface does not fluctuate largely irrespective of the fact that the outside air temperature Ta fluctuates largely with time and that the day fluctuation range of the temperature Tb of the bottom casing external surface remains within the desired range. Additionally, the number E of bubble-caused defects that adhere to the bottom surface of the glass ribbon is small, and hence, it is seen that the production of bubble-caused defects is suppressed.

### (Comparison Example 1)

Comparison Example 1 was identical with Example 1 excluding a change made therein in which the supply amount of air as fluid was made constant. Fig. 4 is a graph depicting day fluctuations in the temperature Tb of a bottom casing external surface, the outside air temperature Ta on the bottom casing external surface and the number E of depressed bubble-caused defects formed in a bottom surface of a glass ribbon. Tb, Ta and E are mean values of data taken for one week.

It is seen from Fig. 4 that the outside air temperature Ta on the bottom casing external surface fluctuations largely with time and that the temperature Tb of the bottom casing external surface also fluctuates largely to its day fluctuation range. The day fluctuation range of the temperature Tb of the bottom casing external surface is 5°C or more. In addition, it is seen that the number E of bubble-caused defects adhering to the bottom surface of the glass ribbon is increased.

While the invention has been described in detail with reference to specific embodiments thereof, it will be apparent to one skilled in the art that various changes and modifications can be made therein without departing from the spirit and scope thereof.
The present application is based on Japanese Patent Application No. 2010-247596 filed on November 4, 2010, and the contents are incorporated herein by reference.

### INDUSTRIAL APPLICABILITY

Since the sheet glass obtained by the production method and the production system of the invention does not have many bubble-caused defects in the bottom surface thereof, it is possible to reduce the removal amount of the bottom surface, thereby making it possible to improve the productivity of sheet. The sheet produced is useful as a glass substrate for a display of a liquid crystal display unit.

### DESCRIPTION OF REFERENCE NUMERALS AND SIGNS

10 melting bath;
11 glass raw material;
12 molten glass;
13 molten metal;
14 glass ribbon;
20 bath;
21 brick;
21 A bottom brick;
22 casing;
22A bottom casing;
22B bottom casing external surface;
30 fluid supply device;
31 fluid supply machine;
32 supply pipe;
32A main pipe;
32B branch pipe;
33 temperature measuring device;
34 temperature indicator;
35 control device; and
100 float-forming device.

## Claims

1. A method for producing a float sheet glass, the method comprising:
producing a molten glass by supplying a glass raw material into a melting bath;
supplying continuously the molten glass onto a surface of a molten metal held in a bath including bottom bricks and a bottom casing which covers the bottom bricks; and
causing the molten glass to flow in a predetermined direction along the surface of the molten metal, and then float-forming the molten glass into a band plate-shaped glass ribbon,
wherein a fluctuation range of a temperature of an external surface of the bottom casing is controlled to fall within 4°C.

2. The method for producing a float sheet glass according to claim 1, wherein the fluctuation range is controlled to fall within 4°C by measuring a temperature of the external surface of the bottom casing and blowing a fluid against the external surface of the bottom casing based on the temperature measured.

3. The method for producing a float sheet glass according to claim 1 or 2, wherein the fluctuation range is controlled to fall within 4°C throughout a day.

4. The method for producing a float sheet glass according to claim 2 or 3, wherein the fluid is air, a mixture of air and water, or water.

5. The method for producing a float sheet glass according to claim 4, wherein the air is blown against the external surface of the bottom casing by an air supply fan in which a rotation speed thereof is controlled by an inverter.

6. A device for producing a float sheet glass comprising:
a melting bath which melts a glass raw material to produce a molten glass; and
a bath holding a molten metal in which the molten glass is continuously supplied onto a surface thereof and including bottom bricks and a bottom casing which covers the bottom bricks, the device being configured to float-form the molten glass into a band plate-shaped glass ribbon,
wherein a fluid supply device is provided on an outer circumference of the bottom casing, and the fluid supply device is configured to control a day fluctuation range of a temperature of an external surface of the bottom casing to fall within 4°C by blowing fluid against the external surface of the bottom casing based on a measured temperature of the external surface of the bottom casing.

7. The device for producing a float sheet glass according to claim 6, wherein the fluid supply device comprises:
a fluid supply machine configured to supply the fluid;
a supply pipe in which one open end face thereof is connected to the fluid supply machine and the other open end face of the supply pipe oppositely faces the external surface of the bottom casing;
a temperature measuring device disposed on the external surface of the bottom casing; and
a control device configured to control supply amount of the fluid which is supplied from the fluid supply machine based on the temperature of the external surface of the bottom casing, measured by the temperature measuring device.

8. The device for producing a float sheet glass according to claim 7, wherein the fluid supply device is a device which supplies air, a mixture of air and water, or water.

9. The device for producing a float sheet glass according to claim 8, wherein the fluid supply machine comprises an air supply fan in which a rotation speed thereof is controlled by an inverter.

10. The device for producing a float sheet glass according to any one of claims 7 to 9, wherein the supply pipe comprises:
a main pipe which is disposed in a longitudinal direction of the bath; and
a branch pipe that branches off the main pipe along the longitudinal direction of the bath and which further branches so as to spread out toward the end along a transverse direction of the bath.
